# EUROPEAN PATENT APPLICATION

(11) **EP 3 100 984 A1**
(43) Date of publication of application: **07.12.2016**
(21) Application number: 16171811.9
(22) Date of filing: 27.05.2016
(51) Int. Cl.: C02F 11/12, B30B 9/12, F26B 17/18

(54) **SLUDGE DEHYDRATOR EQUIPPED WITH MAIN-AXIS SCREW CONVEYER SECTION AND NON-AXIS SCREW CONVEYER SECTION**

(30) Priority: 05.06.2015 KR 20150079733; 25.05.2016 KR 20160063989
(71) Applicant: ARK Co., Ltd., Seoul 06253 (KR)
(72) Inventor: HONG, Sang Hun, 06217 Seoul (KR); PARK, Keum Sook, 06217 Seoul (KR)
(74) Representative: Cabinet Chaillot

(57) **Abstract**

Disclosed is a sludge dehydrator (100) equipped with a main-axis screw conveyer section and a non-axis screw conveyer section. The sludge dehydrator includes a cylinder (C1, C2) having holes or slits that allow water squeezed out of sludge to be discharged therethrough and a sludge compressing means that is installed to extend along a central axis of the cylinder and transports and compresses sludge so that water squeezed out of the sludge to be discharged through the holes or slits. The compressing means includes: a first shaft (180) that extends along the central axis of the cylinder; a second shaft (190) that surrounds a portion of a length of the first shaft and is rotatably combined with the first shaft; and a screw conveyer (110) that is integrated with a circumferential surface of the first shaft and is installed to rotate along a circumferential surface of the second shaft.

## Description

### BACKGROUND OF THE INVENTION

### Field of the Invention

The present invention relates to a sludge dehydrator and more particularly to a dehydrator equipped with a main-axis screw conveyer section and a non-axis screw conveyer section, the sludge dehydrator being capable of preventing sludge from sticking to blades of a screw conveyer so that the sludge can be smoothly discharged.

### Description of the Related Art

The amount of wastewater is globally increasing every year. This contributes to growing environmental pollution concerns. Therefore, various attempts at effective wastewater treatment have been made. That is, various technologies regarding a sludge dehydrator that dehydrates sludge to produce a sludge cake have been developed.

At present, the majority of sludge dehydrators use a screw press filtration process to dehydrate sludge and produce a sludge cake. These sludge dehydrators have been improved in terms of dehydration efficiency by employing a punched screen cylinder. Therefore, water contained in sludge can be discharged through the punched holes of the punched screen cylinder. Specifically, in this conventional sludge dehydrator, a screw conveyer for transporting and compressing sludge extends along a central axis of a punched screen cylinder. The screw conveyer squeezes water out of sludge by transporting and compressing the sludge, and the squeezed water is discharged through the punched holes of the screen cylinder.

These conventional sludge dehydrators are structured in such a manner that a screw conveyer squeezes water out of sludge while transporting the sludge through its rotation motion and allowing the squeezed water to be discharged outside through the punched holes of a fixed screen cylinder. That is, in conventional sludge dehydrators, a screen cylinder is fixed. Therefore, during dehydration of sludge using conventional sludge dehydrators, sludge is likely to stick to or accumulate on the surface of a screen cylinder. This impedes discharge of water out of the sludge dehydrator, thereby deteriorating sludge dehydration efficiency.

In order to solve this problem, a stack-type sludge dehydrator in which a cylinder is formed by alternately stacking multiple ring-shaped fixed discs and multiple ring-shaped movable discs, with gaps between every fixed disc and every movable disc has been developed. As for the stack-type sludge dehydrator, the movable discs move between the adjacent fixed discs when the screw conveyer, which is installed to extend along the central axis of the disc-stacked cylinder, transports and compresses sludge through its rotation motion. At this point, water squeezed out of the sludge is discharged through gaps between every fixed disc and every movable disc, and sludge residue stuck in the gaps can be washed out.

The screen-type sludge dehydrators and the stack-type sludge dehydrators are structured to allow water, which is squeezed out of sludge by a screw conveyer that is installed to extend along a central axis of a cylinder and that moves and compresses sludge, to be discharged through punched holes of the screen cylinder or through gaps between the fixed discs and movable discs of a disc-stacked cylinder. The screw conveyer includes a driving shaft that extends along the central axis of the cylinder, and screw blades provided on the circumferential surface of the driving shaft. In conventional screw conveyers, the driving shaft and the screw blades are unified so as to be simultaneously rotated.

An early conventional screw conveyer used a driving shaft having a uniform diameter over a range of the length of a cylinder. However, the screw conveyer equipped with the driving shaft having a uniform diameter has a disadvantage that sludge sticks to or accumulates on the surface of the driving shaft or the screw blades of the screw conveyer because the driving shaft has a uniform diameter even though the water content in sludge decreases toward a rear end of the cylinder through which dehydrated sludge is discharged, from a front end into which raw sludge with high water content is introduced. That is, since the sludge dehydrator is full of sludge, the sludge cannot move to be discharged outside the sludge dehydrator but it continuously further accumulates in the sludge dehydrator. Furthermore, since there is only the force that pushes the sludge toward the rear end of the cylinder of the sludge dehydrator, the sludge has to be discharged outside the sludge dehydrator through a center portion of a backpressure plate disposed at the rear end of the cylinder. Therefore, sludge with low water content sticks to the backpressure plate while it is being discharged through the center portion of the backpressure plate, which impedes smooth discharging of sludge.

For such a reason, a new screw conveyer having a tapered driving shaft was developed in which the tapered driving shaft has a diameter that increases toward a sludge cake discharge hole. However, this screw conveyer cannot still perfectly address the problem that sludge accumulates on the surface of the driving shaft or on the blades of a screw conveyer even though the screw conveyer can reduce accumulation of sludge on the blades of the screw conveyer or on the driving shaft compared to the screw conveyer equipped with a driving shaft having a uniform diameter. That is, since the sludge dehydrator is full of sludge, the sludge cannot move within the sludge dehydrator, resulting in continuous accumulation of sludge in the sludge dehydrator.

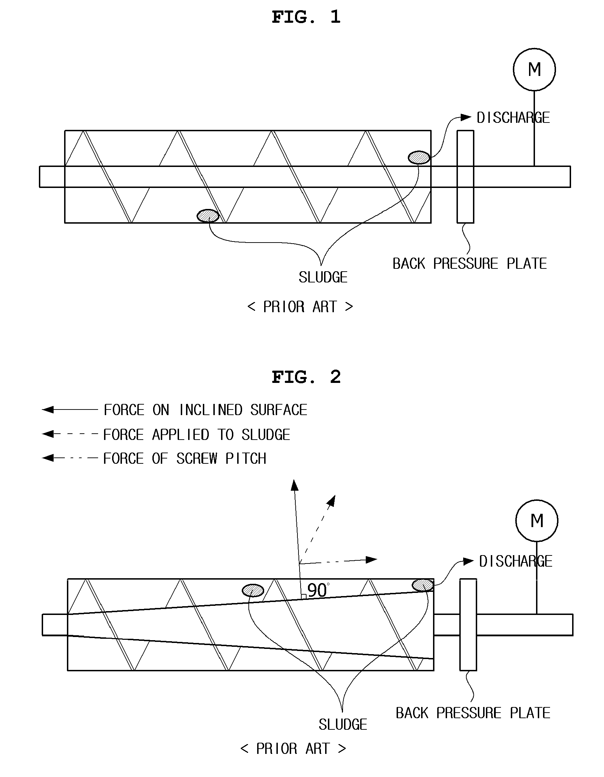

In addition, the structure of FIG. 2 has a problem that since the direction of force that is applied to sludge during compression of the sludge is the same as the direction in which water squeezed out of the sludge is discharged, a reduction in the water content of a sludge cake is unsatisfactory. In case of sludge that can be easily compressed, since water squeezed out of the sludge cannot be smoothly discharged, there are high fluctuations in water content of sludge cakes produced through compression of sludge. Furthermore, since the sludge dehydrator is jammed full of sludge and thus sludge cannot move to be discharged outside the sludge dehydrator, if the number of rotations of the screw conveyer is increased to increase a sludge treatment amount, the screw conveyer rotates in a direction to transport the sludge toward the sludge discharged side before squeezed water is naturally discharged due to gravity, which produces high water content sludge which is difficult to be treated.

The foregoing is intended merely to aid in the understanding of the background of the present invention, and is not intended to mean that the present invention falls within the purview of the related art that is already known to those skilled in the art.

### Documents of Related Arts

### Patent Document

(Patent Document) Korean Patent No. 10-0978040 (registered on August 19, 2010)

### SUMMARY OF THE INVENTION

Accordingly, the present invention has been made keeping in mind the above problems occurring in the prior art, and an object of the present invention is to provide a sludge dehydrator equipped with a main-axis screw conveyer section and a non-axis screw conveyer section that prevents sludge from sticking to screw blades or the like, thereby enabling smooth discharge of sludge.

Another object of the present invention is to provide a sludge dehydrator equipped with a main-axis screw conveyer section and a non-axis screw conveyer section. This sludge dehydrator transports and compresses sludge by rotating the main-axis screw conveyer section and the non-axis screw conveyer section in opposite directions to each other, which eliminates fluctuations in water content of sludge cakes produced even if the number of rotations of a screw conveyer is changed, which results in an increase in a sludge treatment amount.

In order to accomplish the objects of the invention, there is provided a sludge dehydrator equipped with a main-axis axis screw conveyer section and a non-axis screw conveyer section, the sludge dehydrator including: a cylinder having holes or slits that allow water squeezed out of sludge to be discharged therethrough; and a sludge compressing means that is installed to extend along a central axis of the cylinder and receives driving force from a driving source, thereby transporting and compressing sludge to dehydrate the sludge and allow water squeezed out of the sludge to be discharged through the holes or slits, wherein the compressing means includes: a first shaft that extends along the central axis of the cylinder; a second shaft that surrounds a portion of a length of the first shaft, is disposed on a side from which dehydrated sludge is discharged, and is rotatably combined with the first shaft; and a screw conveyer that is integrated with a circumferential surface of the first shaft and which is installed to rotate along a circumferential surface of the second shaft to dehydrate sludge by transporting and compressing the sludge through rotational motion thereof.

The second shaft may receive driving force from an additional driving source, thereby being rotated in a direction opposite to rotation of the first shaft and the screw conveyer.

The second shaft may have a tapered structure in which an external diameter of the second shaft is gradually increased toward a sludge discharge side from which dehydrated sludge is discharged.

The cylinder may be made from a punched screen.

The cylinder may be a stacked cylinder prepared by alternately stacking multiple fixed discs and multiple movable discs, with a gap between each of the fixed discs and each of the movable discs that are adjacent to each other.

The cylinder may include: a stacked cylinder prepared by alternately stacking multiple fixed discs and multiple movable discs, with a gap between each of the fixed discs and each of the movable discs that are adjacent to each other; and a screen cylinder that is made from a punched screen and is connected to an end of the stacked cylinder in a longitudinal direction.

The screen cylinder may have a tapered structure in which an internal diameter of the screen cylinder is gradually decreased toward a sludge discharge side from which dehydrated sludge is discharged.

The sludge dehydrator may further include a cutting member that is installed in a position at which the cutting member does not collide with screw blades of the screw conveyer, thereby cutting dehydrated sludge into lumps.

Since the sludge dehydrator according to the present invention includes a main-axis screw conveyer section and a non-axis screw conveyer section, it is possible to prevent dehydrated sludge from sticking to screw blades or the like, thereby enabling smooth discharge of dehydrated sludge.

In addition, since the sludge dehydrator according to the present invention transports and compresses sludge by rotating the main-axis screw conveyer section and the non-axis screw conveyer section in opposite directions to each other, it is possible to reduce fluctuations in water content of sludge cakes produced through dehydration of sludge, thereby increasing a sludge treatment amount.

### BRIEF DESCRIPTION OF THE DRAWINGS

The above and other objects, features and other advantages of the present invention will be more clearly understood from the following detailed description when taken in conjunction with the accompanying drawings, in which:
FIGS. 1 and 2 are schematic views illustrating a sludge dehydrator according to a related art;
FIG. 3 is a schematic view illustrating a sludge dehydrator equipped with a main-axis screw conveyer section and a non-axis screw conveyer section, according to one embodiment of the present invention;
FIG. 4 is an exploded perspective view illustrating a relations between elements of the sludge dehydrator equipped with the main-axis screw conveyer section and the non-axis screw conveyer section, according to the embodiment of the present invention;
FIG. 5 is a perspective view illustrating an assembled state of the sludge dehydrator of FIG. 4;
FIG. 6 is a cross-sectional view illustrating a constitutional relation among elements of a compressing means of the sludge dehydrator of FIG. 4;
FIG. 7 is a cross-sectional view illustrating a swinging-triggering means of the sludge dehydrator of FIG. 4;
FIG. 8 is a plan view illustrating operation of the swing-triggering means of FIG. 7;
FIG. 9 is an operation state view illustrating an operation state of the sludge dehydrator of FIG. 5;
FIG. 10 is a comparative graph comparatively illustrating a relation between a rotation speed of a main axis and a water content for an invention example and a comparative example; and
FIG. 11 is a comparative graph comparatively illustrating a relation between a rotation speed of a main axis and a sludge treatment amount for the invention example and the comparative example.

### DETAILED DESCRIPTION OF THE INVENTION

The present invention can be applied to screw press filtration-type sludge dehydrators. That is, the present invention can be applied to both of screen-type sludge dehydrators and stack-type sludge dehydrators. Accordingly, the present disclosure may be embodied in many different forms and should not be construed as being limited to the embodiments set forth herein. Rather, these embodiments are provided so that this disclosure will be thorough and complete and will fully convey the concept of the invention to those skilled in the art.

First, the basic concept of a sludge dehydrator equipped with a main-axis screw conveyer section and a non-axis screw conveyer section, according to the present invention, will be described.

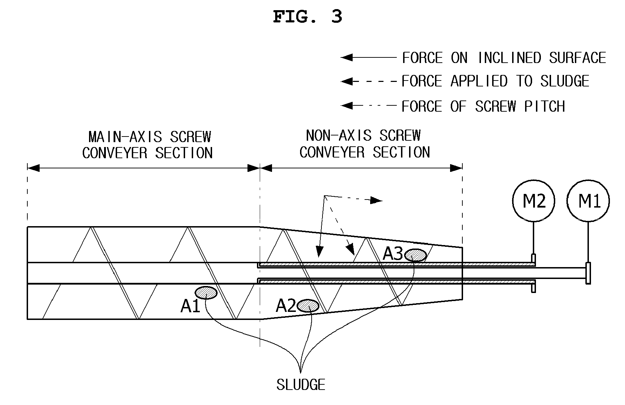

FIG. 3 is a schematic view illustrating a sludge dehydrator equipped with a main-axis screw conveyer section and a non-axis screw conveyer section according to one embodiment of the present invention. As illustrated in FIG. 3, the sludge dehydrator includes the main-axis screw conveyer section and the non-axis screw conveyer section to dehydrate high water content sludge, thereby producing a sludge cake. That is, in the sludge dehydrator according to the present embodiment, a front part of a screw conveyer to which raw sludge is supplied is the main-axis screw conveyer section and a rear part of the screw conveyer from which dehydrated sludge is discharged as a sludge cake is the non-axis screw conveyer section. Therefore, the front part having a main-axis screw conveyer effectively dehydrates sludge while transporting high water content sludge and the rear part having a non-axis screw conveyer effectively discharges dehydrated sludge by preventing the dehydrated sludge from sticking to the surface of a shaft or the surfaces of screw blades.

According to the present embodiment, it is preferable that the main-axis screw conveyer section and the non-axis screw conveyer section rotate in opposite directions to each other. As illustrated in FIG. 3, sludge is gradually compressed while being transported in A1 to A3 directions by a first motor M1, and the sludge starts to be solidified at a position A2. Therefore, a screw conveyer in the non-axis screw conveyer section is rotated in the reverse direction, by a second motor M2, at the position A2 where the sludge is supposed to be solidified, so the sludge neither solidifies nor adheres to the surfaces of the shaft and screw blades but can be easily transported toward a sludge cake discharge hole.

In addition, when shafts in the main-axis screw conveyer section and in the non-axis screw conveyer section are rotated in opposite directions to each other, the sludge transported through the main-axis screw conveyer section starts to accumulate from the boundary between the main-axis screw conveyer section and the non-axis screw conveyer section and the accumulated sludge is then transported through the non-axis screw conveyer section. In the non-axis screw conveyer section, the sludge is transported in a state in which the inside of the non-axis screw conveyer section is jammed full of sludge. Accordingly, since squeezed water does not move along the shaft of the screw conveyer as in related arts, even though the rotation speed of the screw conveyer is increased, there is no fluctuation in water content of dehydrated sludge, which results in an increase in a sludge treatment amount.

In addition, the sludge dehydrator according to the present embodiment further includes a cutting member that is installed on the shaft of the non-axis screw conveyer at a position where it does not collide with blades of a screw conveyer, and which cuts dehydrated sludge into lumps. That is, it is possible to facilitate transportation and discharge of sludge by making cracks or spaces in excessively compressed sludge.

Next, a preferred embodiment of a complex sludge dehydrator that is a combination of a screen type and a stack type will be described below with reference to accompanying drawings.

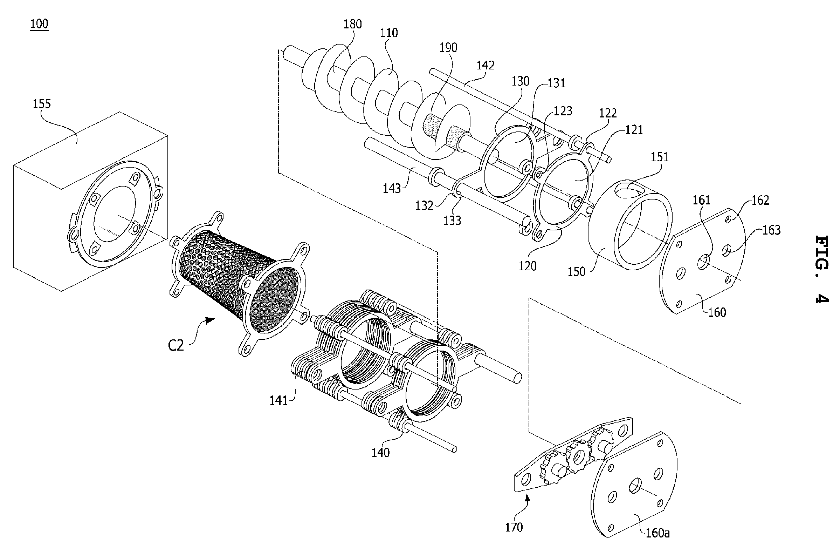

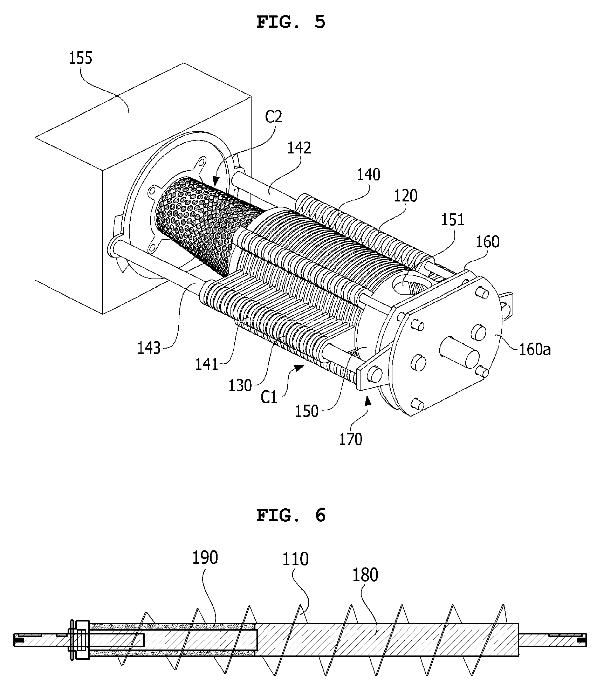

FIG. 4 is an exploded perspective view illustrating a constitutional relation among elements of a sludge dehydrator equipped with a main-axis screw conveyer section and a non-axis screw conveyer section according to one embodiment of the present invention. FIG. 5 is a perspective view illustrating an assembled state of the sludge dehydrator of FIG. 4 and FIG. 6 is a cross-sectional view illustrating the structure of a compressing means of the sludge dehydrator of FIG. 4.

As illustrated in FIGS. 4 to 6, a sludge dehydrator 100 according to one embodiment is an apparatus for dehydrating sludge to produce a sludge cake. The sludge dehydrator 100 includes: a stacked cylinder C1 composed of multiple fixed discs 120 and multiple movable discs 130 that are alternately arranged with gaps between every fixed disc and every movable disc; a screen cylinder C2 that extends from a second end of the stacked cylinder and is made from a punched screen; a first shaft 180 that is disposed inside the stacked cylinder C1 and the screen cylinder C2 and extends along central lines of the stacked cylinder C1 and the screen cylinder C2; a second shaft 190 that is rotatably engaged with the first shaft 180 and surrounds a portion of the length of the first shaft 180; a screw conveyer 110 that is integrated with and provided on the surface of the first shaft 180 and rotates along the surface of the second shaft 190; a swinging-triggering means 170 that causes the movable discs 130 to swing with respect to the fixed discs 120 by receiving driving force of the first shaft 180; and a motor (not shown) that is installed at an end of the first shaft 180 and serves as a driving source that provides driving force to rotate the first shaft 180 and the screw conveyer 110. A combination of the first shaft 180, the second shaft 190, and the screw conveyer 110 functions as a compressing means for transporting and compressing sludge for dehydration of the sludge by receiving driving force from the driving source.

The main-axis screw conveyer section is composed of the first shaft 180 and a portion of the screw conveyer 110. The non-axis screw conveyer section is composed of the second shaft 190 and the remaining portion of the screw conveyer 110.

The screw conveyer 110 rotates about the first shaft 180. The screw conveyer 110 also rotates along the surface of the second shaft 190, thereby transporting and compressing sludge for dehydration of sludge. The screw conveyer 110 rubs against the surface of the second shaft 190 while rotating along the circumferential surface of the second shaft 190. Therefore, it is possible to prevent sludge from sticking to the surface of the second shaft 190 and to blades of the screw conveyer 110 disposed at a position near a sludge cake discharge hole at which sludge is supposed to be solidified, so sludge can be smoothly discharged outside the sludge dehydrator through the sludge cake discharge hole.

The fixed discs 120 and the movable discs 130 are all disc-shaped or ring-shaped members with a predetermined equal thickness. The fixed discs 120 have respective central through-holes 121 having an equal diameter and the movable discs 130 have respective central through-holes 131 having an equal diameter. Each of the fixed discs 120 has two pairs of protrusions 122 on the circumferential surface thereof. Each of the movable discs 130 has a pair of protrusions 132 on the circumferential surface thereof. The protrusions 122 and 132 are provided with respective insertion holes 123 and 133.

The multiple fixed discs 120 and the multiple movable discs 130 are alternately stacked to form one stacked cylinder C1 as illustrated in FIG. 5. The protrusions 122 of the fixed discs 120 are aligned in line with each other and the protrusions 132 of the movable discs 130 are aligned in line with each other, in a longitudinal direction of the stacked cylinder C1. However, the protrusions 122 of fixed discs 120 and the protrusions 132 of the movable discs 130 are not overlapped with each other but distanced from each other. In addition, since the through-holes 121 of the fixed discs 120 and the through-holes 131 of the movable discs 130 have an equal diameter, the alternative arrangement of the fixed discs 120 and the movable discs 130 forms an elongated space defined by the inside walls of the through holes 121 and 131. This space functions as a sludge transportation channel.

According to the present embodiment, each fixed disc 120 has four protrusions 122. The four protrusions 122 of each fixed disc 120 are symmetrically arranged with respect to the center of the through-hole 121. Although there are four protrusions 122 for each fixed disc 120 in the present embodiment, the number of protrusions 122 may not be limited thereto but may be increased or decreased as necessary.

A fixing bar 142 is inserted through the insertion holes 123 in the protrusions 122, which are aligned in line with each other, to unify the fixed discs 120. Since there are four rows of the insertion holes 123 of the protrusions 122, four fixing bars 142 are used. The fixing bars 142 extend in the longitudinal direction of the stacked cylinder C1. The fixing bars 142 fasten the fixed discs 120 such that the fixed discs 120 do not move in a circumferential direction of the stacked cylinder C1 nor do they move in the longitudinal direction of the stacked cylinder C1. Spacers 140 are put on each fixing bar 142 and are arranged to alternate with the fixed discs 120, thereby maintaining uniform gaps between every adjacent fixed discs 120. The spacers 140 are thicker than the movable discs 130. Accordingly, there is a gap between each fixed disc 120 and each movable disc 130.

According to the present embodiment, the fixed discs 120 and the movable discs 130 are stacked such that the protrusions 132 of the movable discs 130 are disposed between the protrusions 122 of the fixed discs 120 in a circumferential direction. This arrangement increases a swinging range of the movable discs 130 by reducing interference of the protrusions 122 of the fixed discs 120 with the protrusions 132 of the movable discs 130.

Two swinging bars 143 that fasten the movable discs 130 to each other are inserted, in the longitudinal direction of the stacked cylinder C1, through the insertion holes 133 of the movable discs 130. The swinging bars 143 are used to collectively swing the movable discs 130. Spacers 141 are put on the swinging bars 143 and are arranged to be alternate with the stacked multiple movable discs 130, thereby maintaining uniform gaps between every adjacent movable discs 130.

The spacers 141 are thicker than the fixed discs 120. Accordingly, there are gaps between each fixed disc 120 and each movable disc 130. The size of each gap is as large as a difference between the thickness of the spacers 140 and 141 and the thickness of the fixed discs 120 and movable discs 130. The gaps function as discharge paths through which water squeezed out of sludge can be discharged out of the stacked cylinder C1.

A connection cylinder 150 having the same diameter as the through-holes 121 and 131 of the fixed discs 120 and movable discs 130 is installed at a first end of the stacked cylinder C1. Respective ends of the connection cylinder 150 are open so that a material can move through the connection cylinder 150 in a longitudinal direction thereof. An inlet hole 151 is formed in a portion of a circumferential surface of the connection cylinder 150. The inlet hole 151 functions as a sludge supply hole through which sludge is supplied to the sludge dehydrator. The connection cylinder 150 has to be fixed. Therefore, the connection cylinder 150 is combined with the outermost fixed disc 120 that does not rotate or swing. Since the outermost discs at respective ends of the stacked cylinder C1 have to be fixed, the outermost discs are the fixed discs 120.

The screen cylinder C2 is connected to the second end of the stacked cylinder C1 and is made from a punched screen. A sludge cake container 155 is installed at a second end of the screen cylinder C2 to collect a sludge cake that is dehydrated sludge. The screen cylinder C2 has a diameter that is equal to that of the through-holes 121 and 131, at a first end thereof, but gradually decreases toward the second end to which the sludge cake container 155 is connected. That is, the screen cylinder C2 tapers to the second end thereof to which the sludge cake container 155 is connected. This structure allows a larger amount of sludge to be contained in the screen cylinder C2 than conventional ones, thereby enabling sludge to be more effectively compressed and smoothly discharged outside. Alternatively, the screen cylinder C2 may have a uniform diameter that is substantially the same as the through-holes 121 and 131 of the fixed discs 120 and movable discs 130.

The screen cylinder C2 includes: a case that has a predetermined length and has multiple identical holes arranged at regular intervals in the surface thereof, and a screen mesh that is installed inside the case and has fine holes. The holes of the screen mesh function as discharge holes that allow water squeezed out of sludge to be discharged outside therethrough. The screen cylinder C2 is fixedly installed using a fixing member.

The first shaft 180, the second shaft 190, and the screw conveyer 110 are installed inside the stacked cylinder C1 and the screen cylinder C2. The first shaft 180 and the screw conveyer 110 are installed to extend through the connection cylinder 150, the stacked cylinder C1, the screen cylinder C2, and the sludge cake container 155. However, the blades of the screw conveyer 110 are disposed only within the stacked cylinder C1 and the screen cylinder C2. That is, the blades of the screw conveyer 110 are not disposed within the sludge cake container 155. On the other hand, the second shaft 190 is installed only in the screen cylinder C2.

The second shaft 190 has a uniform diameter over a range of the full length of the screen cylinder C2. Alternatively, the second shaft 190 may taper such that the external diameter thereof increases toward the sludge cake discharge hole, i.e., toward the sludge cake container 155. In the sludge dehydrator 100 according to the present embodiment, since the screen cylinder C2 or the second shaft 190 has a tapered structure, it is possible to more efficiently compress sludge and smoothly discharge dehydrated sludge.

An end (first end) of the second shaft 190 is rotatably coupled to the first shaft 180 and the other end (second end) of the second shaft 190 is fixed to the sludge cake container 155. That is, the second shaft 190 is fixed not to rotate with respect to the screw conveyer 110. However, there is a case that the respective ends of the second shaft 190 are rotatably supported by the first shaft 180 and the sludge cake container 155 and that an additional motor, apart from the motor for driving the screw conveyer 110, is connected to the second end (at which the sludge cake container 150 is disposed) of the second shaft 190. In this case, the second shaft 190 may be rotated independently of the screw conveyer 110. In this case, when the second shaft 190 is installed to rotate in the reverse direction to the rotation of the screw conveyer 110, it is possible to adjust sludge transportation speed.

That is, since the first shaft 180 and the second shaft 190 are rotated in opposite directions, sludge that is dehydrated and transported by the first shaft 180 and the screw conveyer 110 in the main-axis screw conveyer section comes to move in an accumulated state, along the second shaft 190 and the screw conveyer 110 in the non-axis screw conveyer section, from a position where the first shaft 180 meets the second shaft 190. That is, in the non-axis screw conveyer section, the sludge moves in a state in which the sludge dehydrator is jammed full of sludge. Therefore, since squeezed water does not move along the second shaft 190 as it does in conventional arts, an increase in rotation speed of the screw conveyer 110 does not cause fluctuations in water content of dehydrated sludge. Accordingly, it is possible to increase a sludge treatment amount.

In addition, the sludge dehydrator according to the present embodiment includes a cutting member (not shown) that cuts dehydrated sludge into lumps. The cutting member is installed in a position where it does not interfere with motion of the screw conveyer 110. Since the cutting member causes cracks or makes spaces in the excessively compressed sludge, it is possible to facilitate transportation and discharge of sludge.

The blades of the screw conveyer 110 rotate about the central axis of the first shaft 180. The blades of the screw conveyer 110 transport sludge, supplied through the inlet hole 151 of the connection cylinder 150 connected to the first end of the stacked cylinder C1, toward the sludge cake container 155 installed at the second end of the screen cylinder C2, and compresses the sludge in the longitudinal direction of the stacked cylinder C1 and the screen cylinder C2. The blades of the screw conveyer 110 are rotated about the central axis of the first shaft 180 by the motor that is installed at the end of the first shaft 180 and provides driving force, and are also rotated about the second shaft 190.

A reinforcing plate 160 in which first, second, and third coupling holes 161, 162, and 163 are formed is coupled to an end of the connection cylinder 150. The first shaft 180, the fixing bar 142, and the swinging bar 143 are coupled to the reinforcing plate 160 through the first, second, and third coupling holes 161, 162, and 163. An end of the first shaft 180 is rotatably engaged with the first coupling hole 161 via a bearing (not shown) mechanism. An end of the fixing bar 142 is fixedly engaged with the second coupling hole 162. An end of the swinging bar 143 is rotatably engaged with the third coupling hole 163. Accordingly, the multiple fixed discs 120 fastened by the fixing bar 142 do not move.

A swinging-triggering means 170 for swinging the swinging bar 143 is combined with an outer surface of the reinforcing plate 160. The swinging-triggering means 170 converts rotational motion of the screw conveyer 110 into reciprocating swinging motion of the swinging bar 143.

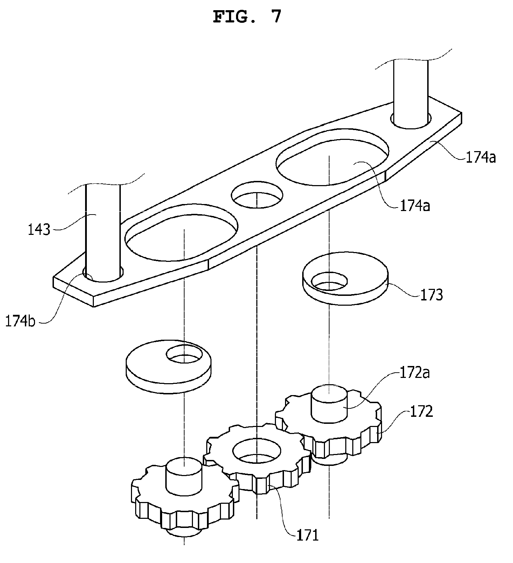

FIG. 7 is a perspective view illustrating the swinging-triggering means of the sludge dehydrator of FIG. 4. As illustrated in FIG. 7, the swinging-triggering means 170 includes a driving gear 171, a driven gear 172, a cylindrical cam 173, and a follower plate 174.

The driving gear 171 is connected to the first shaft 180, so the driving gear 171 and the first shaft 180 rotate together. Driven shafts 172a are installed on left and right sides of an end portion of the first shaft 180. The driven shafts 172 are in parallel with the end portion of the first shaft 180. The driven shafts 172a are engaged with respective driven gears 172 that mesh with the driving gear 171.

The cylindrical cam 173 is installed on one surface of the driven gear 172. The cylindrical cam 173 is eccentrically engaged with the driven gear 172. Accordingly, when the driven gear 172 is rotated, the cylindrical cam 173 rotates about the driven shaft 172a of the driven gear 172. That is, the cylindrical cam 173 receives driving force from a driving unit that is composed of the first shaft 180, the driving gear 171, and the driven gear 172. The driving unit transmits rotational motion of the screw conveyer 110 to the cylindrical cam 173 via a driving force transmission means that is a combination of the driving gear 171 and the driven gear 172.

The follower plate 174 is rotatably engaged with the first shaft 180. The follower plate 174 has multiple guide holes 174a that extend through the whole thickness thereof in the longitudinal direction of the stacked cylinder C1 and multiple insertion holes 174b. The cylindrical cams 173 are inserted in the respective guide holes 174a and end portions of the swinging bars 143 are inserted in the insertion holes 174b.

The guide holes 174a have a rectangular shape. The width of the guide holes 174a is equal to the diameter of the cylindrical cam 173 and the length of the guide holes 174a is equal to or larger than a rotation diameter of the cylindrical cam 173. The cylindrical cam 173 moves relatively to the guide hole 174a in the longitudinal direction of the guide hole 174a. That is, when the driven gear 172 is rotated about the driven shaft 172a, the cylindrical cam 173 pushes the wall of the guide hole 174a to turn the follower plate 174 and moves in the longitudinal direction of the guide hole 174a. At this point, since the swinging bar 143 is engaged with the follower plate 174, when the follower plate 174 is rotated, the multiple movable discs 130 are swung in the same direction as the follower plate 174.

According to the present embodiment, an additional reinforcing plate 160a is connected to an outer surface of the swinging-triggering means 170. The reinforcing plate 160a protects the swinging-triggering means 170 from external impact and supports the shafts and rods.

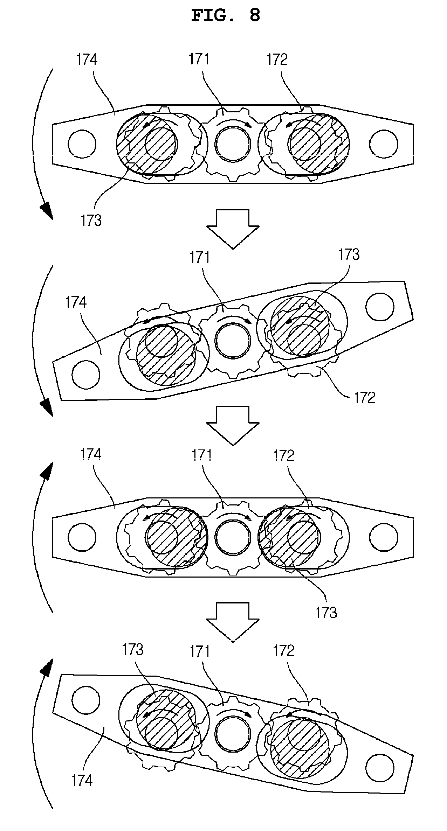

FIG. 8 is a plan view illustrating operation flow of the swinging-triggering means of FIG. 7. As illustrated in FIG. 8, when the driving gear 171 is rotated, the driven gear 172 is rotated in the reverse direction to the rotation of the driving gear 171. Next, the cylindrical cam 173 engaged with the driven gear 172 is rotated about the driven shaft 172a, while drawing a circular path. At this point, since the cylindrical cam 173 is inserted in the guide hole 174a of the follower plate 174, when the cylindrical cam 173 is rotated, the cylindrical cam 173 pushes the wall of the guide hole 174a and moves in the longitudinal direction of the guide hole 174a. Accordingly, the follower plate 174 performs reciprocating swinging motion, within an overlapped range of the rotation path of the cylindrical cam 173 and the rotation path of the guide hole 174a, around the end portion of the non-axis screw conveyer 110.

A swinging angle of the follower plate 174 is the largest when the cylindrical cam reaches a middle portion of the guide hole 174a and gradually decreases as it rotates in the opposite direction along with the rotation of the cylindrical cam 173 after the cylindrical cam 173 passes the middle portion and moves toward an end portion of the guide hole 174a. The swinging angle of the follower plate 174 is the smallest when the cylindrical cam 173 is at either end of the guide hole 174a. That is, when the cylindrical cam 173 performs rotational motion, the follower plate 174 performs reciprocating swinging motion within a predetermined range. Accordingly, when the first shaft 180 is rotated, the movable discs 130 perform reciprocating swinging motion within a predetermined range due to the movements of the cylindrical cams 173 and the follower plate 174, thereby removing foreign matter stuck between each fixed disc 120 and each movable disc 130. The swinging angle of the follower plate 174 can be adjusted by adjusting the rotation diameter of the cylindrical cam 173.

The motor is installed at an end of the first shaft 180 to supply driving force, thereby rotating the screw conveyer 110 and causing reciprocating swinging motion of the multiple movable discs 130 via the swinging bars 143, which are operated by the swinging-triggering means 170 that is operably linked to the first shaft 180.

Hereinbelow, the overall operation flow of the sludge dehydrator according to the above-described embodiment will be described in detail.

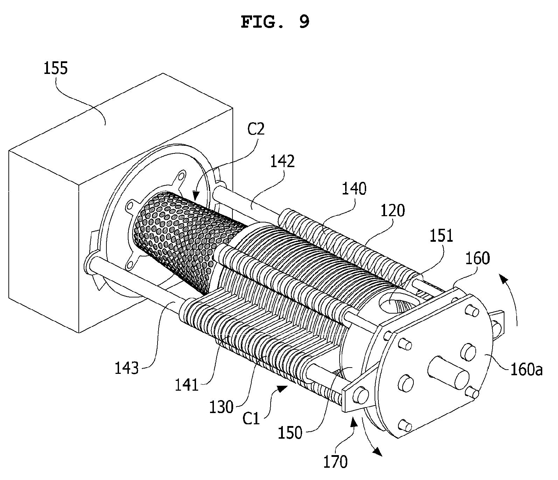

FIG. 9 is a perspective view illustrating an operation state of the sludge dehydrator of FIG. 5. As illustrated FIGS. 4 through 9, sludge is introduced through the inlet hole 151 of the connection cylinder 150 connected to the first end of the stacked cylinder C1. Next, the first shaft 180 and the screw conveyer 110 are driven to operate, thereby transporting the sludge contained in the stacked cylinder C1 toward the sludge cake container 155 through the screen cylinder C2.

That is, the sludge that is being dehydrated is transported from the main-axis screw conveyer section to the non-axis screw conveyer section by the first shaft 180 and the screw conveyer 110. Next, since the screw conveyer 110 rubs against and slips along the surface of the second shaft 190 within the non-axis screw conveyer section while rotating along the circumferential surface of the second shaft 190, it is possible to prevent sludge from sticking to the surface of the second shaft 190 or the blades of the screw conveyer 110. Thus, it is possible to smoothly transport sludge toward the sludge cake container 155 through the screen cylinder C2.

When the first shaft 180 and the second shaft 190 are rotated in the opposite directions to each other, the sludge, which is firstly dehydrated and transported by the first shaft 180 and the screw conveyer 110 within the main-axis screw conveyer section, is further transported in an accumulated state along the second shaft 190 and the screw conveyer 110 within the non-axis screw conveyer section, from the boundary between the first shaft 180 and the second shaft 190. That is, from the boundary between the first shaft 180 and the second shaft 190, the sludge is transported in a state in which the non-axis screw conveyer section is jammed full of sludge. For this reason, squeezed water does not move along the second shaft 190 but slowly leaks through holes of the screen cylinder. Therefore, when the rotation speed of the screw conveyer 110 is increased, it is possible to increase a sludge treatment amount without causing fluctuations in water content of dehydrated sludge.

In addition, when operation of the screw conveyer 110 is started, the follower plate 174 performs reciprocating swinging motion about the central axis of the stacked cylinder C1. Then, the movable discs 130 also perform reciprocating swinging motion like the follower plate 174 via the swinging bars 143 engaged with the follower plate 174. At this point, since the fixed discs 120 are fastened by the fixing bars 142 engaged with the reinforcing plate 150, the fixed discs 120 do not rotate.

The reciprocating swinging motion of the movable discs 130 causes continuous forward movement of sludge in the stacked cylinder C1. This movement continuously stimulates sludge, thereby causing smooth squeezing of water out of the sludge and preventing gaps between the fixed discs 120 and the movable discs 130 from being clogged.

On the other hand, the sludge that is transported to the screen cylinder C2 through the stacked cylinder C1 is compressed when the blades of the non-axis screw conveyer 110 are rotated. At this point, water in the sludge is squeezed out and is discharged outside the screen cylinder C2 through the punched holes of the screen cylinder C2.

The sludge cake that is transported to the second end of the screen cylinder C2 by the screw conveyer 110 is discharged through the sludge cake discharge hole (not shown) of the sludge cake container 144 connected to the second end of the screen cylinder C2.

Hereinbelow, the results of comparison between dehydration performance of a conventional sludge dehydrator (hereinafter, referred to as comparative example) and a sludge dehydrator according to the present invention (hereinafter, referred to as invention example) will be described.

The invention example used in the comparative experiment is a hybrid sludge dehydrator in which a screen-type dehydrator and a stack-type dehydrator are mixed. Specifically, the sludge dehydrator of the invention example is equipped with a compressing means shown in FIG. 6 and the sludge dehydrator of the comparative example is equipped with a known screw conveyer shown in FIG. 1.

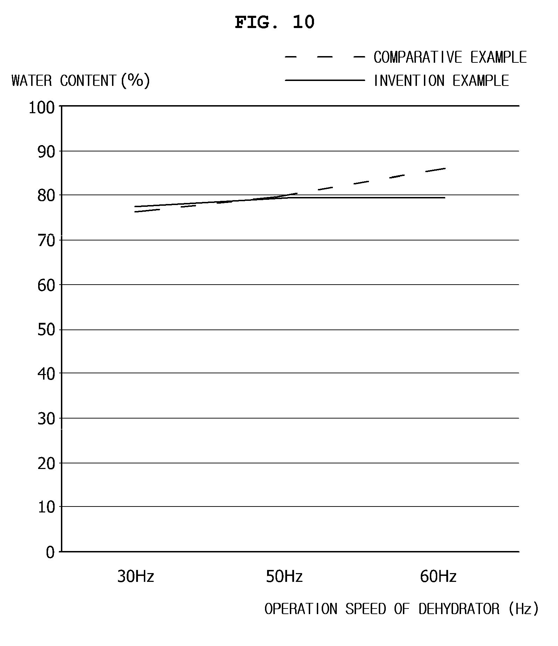

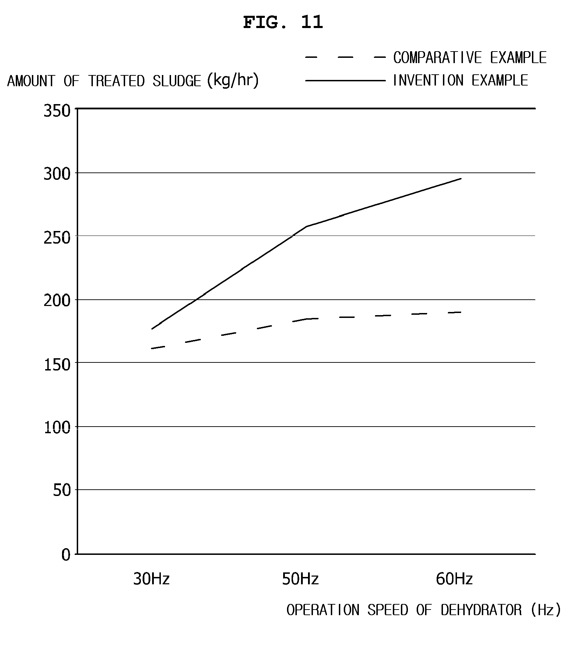

1.3% industrial sludge and 0.8% sludge collected from a wastewater treatment plant in an industrial complex were used for the comparative experiment. Polymer used in the comparative experiment was Hanaro 6125 (liquid). The results of the comparative experiment are summarized in Table 1 and FIGS. 10 and 11.

**[Table 1]**

| Category | Operation Time | Flow Rate of Sludge (m³/hr) | Concentration of Sludge | Operation Speed of Dehydrator (Hz) | Water Content (%) | Discharge Amount of Sludge Cake (kg/hr) | Peak Load (A) |
|---|---|---|---|---|---|---|---|
| Comparative Example | 09:00∼09:30 | 2.7∼3.15 | | 30 | 76.4 | 162kg/hr | 1.4 |
| | 09:30-10:00 | | | | 78.0 | | |
| | 10:00-10:30 | | | 50 | 80.2 | 185kg/hr | |
| | 10:30-11:00 | | | | 86.2 | | |
| Invention Example | 09:00∼09:30 | 2.7∼3.3 | About 1.2% | 30 | 77.7∼78.7 | 178kg/hr | 1.1 |
| | 09:30-10:00 | | | | | | |
| | 10:00-10:30 | | | | | | |
| | 10:30-11:00 | | | | | | |
| | 14:10∼15:10 | | | 50 | 79.5∼81.6 | 258kg/hr | |
| | 15:10~15:30 | | | 60 | 79.5 79.3 | 295kg/hr | |

FIG. 10 is a graph illustrating a relation between rotation speed of a main axis and water content of a sludge cake for each of the comparative example and the invention example and FIG. 11 is a graph illustrating a relation between rotation speed of a main axis and a sludge treatment amount for each of the comparative example and the invention example.

As shown in Table 1 and FIG. 10, the comparative example indicates the result that the amount of squeezed water that moves along the main axis increases according to an increase in the rotation speed of the main axis (shaft) and thus there are high fluctuations in the water content of dehydrated sludge. On the other hand, the invention example indicates the result that there is nearly no fluctuation in water content of dehydrated sludge according to the rotation speed of the main axis. In addition, as shown in Table 1 and FIG. 11, the comparative example indicates the result that a sludge treatment amount slightly increases according to an increase in the rotation speed of the main axis but the invention example indicates the result that a sludge treatment amount increases in proportion to an increase in the rotation speed of the main axis.

Although embodiments of a sludge dehydrator equipped with a main-axis screw conveyer section and a non-axis screw conveyer section according to the present invention have been described with reference to the accompanying drawings, the embodiments disclosed herein are only for illustrative purposes. The present invention may be embodied in many different forms without departing from the spirit and significant characteristics of the present invention. The present invention is intended to cover not only the exemplary embodiments, but also various alternatives, modifications, equivalents and other embodiments that may be included within the spirit and scope of the present invention as defined by the appended claims.

## Claims

1. A sludge dehydrator equipped with a main-axis screw conveyer section and a non-axis screw conveyer section, the sludge dehydrator comprising:
a cylinder having holes or slits that allow water squeezed out of sludge to be discharged therethrough; and
a sludge compressing means that is installed to extend along a central axis of the cylinder and receives driving force from a driving source, thereby transporting and compressing sludge to dehydrate the sludge and allow water squeezed out of the sludge to be discharged through the holes or slits,
wherein the compressing means includes:
a first shaft that extends along the central axis of the cylinder;
a second shaft that surrounds a portion of a length of the first shaft, is disposed on a side from which dehydrated sludge is discharged, and is rotatably combined with the first shaft; and
a screw conveyer that is integrated with a circumferential surface of the first shaft and which is installed to rotate along a circumferential surface of the second shaft to dehydrate sludge by transporting and compressing the sludge through rotational motion thereof.

2. The sludge dehydrator according to claim 1, wherein the second shaft receives driving force from an additional driving source, thereby being rotated in a direction opposite to rotation of the first shaft and the screw conveyer.

3. The sludge dehydrator according to claim 1, wherein the second shaft has a tapered structure in which an external diameter of the second shaft is gradually increased toward a sludge discharge side from which dehydrated sludge is discharged.

4. The sludge dehydrator according to claim 1, wherein the cylinder is made from a punched screen.

5. The sludge dehydrator according to claim 1, wherein the cylinder is a stacked cylinder prepared by alternately stacking multiple fixed discs and multiple movable discs, with a gap between each of the fixed discs and each of the movable discs that are adjacent to each other.

6. The sludge dehydrator according to claim 1, wherein the cylinder includes:
a stacked cylinder prepared by alternately stacking multiple fixed discs and multiple movable discs, with a gap between each of the fixed discs and each of the movable discs that are adjacent to each other; and
a screen cylinder that is made from a punched screen and is connected to an end of the stacked cylinder in a longitudinal direction.

7. The sludge dehydrator according to claim 6, wherein the screen cylinder has a tapered structure in which an internal diameter of the screen cylinder is gradually decreased toward a sludge discharge side from which dehydrated sludge is discharged.

8. The sludge dehydrator according to claim 2, further comprising a cutting member that is installed in a position at which the cutting member does not collide with screw blades of the screw conveyer, thereby cutting dehydrated sludge into lumps.
